# EUROPEAN PATENT SPECIFICATION

(11) **EP 4 502 422 B1**
(45) Date of publication and mention of the grant of the patent: **16.09.2026**
(21) Application number: 23779151.2
(22) Date of filing: 28.02.2023
(51) Int. Cl.: G01M 13/02, G01M 99/00, F16H 25/22, F16H 25/24

(54) **METHOD FOR INSPECTING BALL SCREW DEVICE, INSPECTION JIG, AND INSPECTION DEVICE**
VERFAHREN ZUR INSPEKTION EINER KUGELGEWINDEVORRICHTUNG, INSPEKTIONSEINSPANNVORRICHTUNG UND INSPEKTIONSVORRICHTUNG
PROCÉDÉ D'INSPECTION DE DISPOSITIF À VIS À BILLES, GABARIT D'INSPECTION ET DISPOSITIF D'INSPECTION

(30) Priority: 28.03.2022 JP 2022051627
(43) Date of publication of application: 05.02.2025
(73) Proprietor: NTN Corporation, Osaka-shi Osaka 530-0005 (JP)
(72) Inventor: KATO Akio, Iwata-shi Shizuoka 438-8510 (JP)
(74) Representative: Eder Schieschke & Partner mbB
(86) International application number: PCT/JP2023/007422
(87) International publication number: WO 2023/189121

(56) References cited:
- JP-A- 2016 035 308
- JP-Y2- H0 650 108
- JP-Y2- H0 650 108
- US-A1- 2016 032 966

## Description

### TECHNICAL FIELD

The present invention relates to a method for inspecting a ball screw device, an inspection jig, and an inspection device.

### BACKGROUND ART

In a ball screw device, a large number of balls are disposed in a rolling passage formed by a screw groove formed on an inner peripheral surface of a nut and a screw groove formed on an outer peripheral surface of a screw shaft. The end point and the start point of the rolling passage communicate with each other through a return passage formed in a circulation member such as a tube, and a circulation path for circulating the balls through the rolling passage and the return passage is formed. As a method for incorporating a ball into a circulation path, for example, Patent Literature 1 below discloses a method for incorporating a ball from an inner peripheral side of a nut. In addition, Patent Literature 2 below discloses a method in which an opening for ball insertion is provided on an outer peripheral surface of a nut, and a ball is incorporated into a circulation path from the opening.

### CITATIONS LIST

### PATENT LITERATURE

Patent Literature 1: JP 2530403 B2
Patent Literature 2: JP 2001-99256 A

### SUMMARY OF INVENTION

### TECHNICAL PROBLEMS

When the balls are incorporated into the circulation path of the ball screw device, the number of balls incorporated into the circulation path may be excessively small or excessively large due to failure of assembly equipment or the like, or the balls may enter the screw groove not used as the circulation path. However, in an assembled state of the ball screw device, since the balls are hardly visible from the outside, it is difficult to confirm the number of balls.

Therefore, an object of the present invention is to provide an inspection method for making it possible to easily confirm the number of balls in a circulation path after assembling a ball screw device.
From US 2016/0032966 A1, a linear ball bushing is known that allows smooth linear motion between a shaft and a slider using rolling balls. It introduces an improved design with polygonal outer sleeves, retainers, and end rings that interlock through projections and grooves. This structure simplifies assembly, prevents dust contamination, and enhances alignment accuracy. The design reduces manufacturing complexity and cost while improving durability and ease of mass production. It also discloses lengthwise holes in the opposite ends of the retainer to insert an inspecting member to inspect and determine number of balls charged in the circulating groove.

### SOLUTIONS TO PROBLEMS

In order to achieve the above object, the present invention provides a method for inspecting a number of balls disposed in a circulation path of a ball screw device, the method including
inserting an inspection jig between the balls disposed in the circulation path through a gap between a nut and a screw shaft of the ball screw device, and inspecting the number of the balls by an insertion state of the inspection jig at a time of insertion.

In the ball screw device, a gap in a circumferential direction is provided between the balls in order to make the balls rollable in the circulation path. Therefore, when the number of balls disposed in the circulation path is larger than an appropriate number, a total gap amount between the balls becomes small, and when the number of balls disposed in the circulation path is smaller than the appropriate number, the total gap amount between the balls becomes large. When the inspection jig is inserted between the plurality of balls disposed in the circulation path through the gap between the nut and the screw shaft after the ball screw device is assembled, the insertion state of the inspection jig varies depending on the number of balls disposed in the circulation path. It is therefore possible to confirm whether the number of balls disposed in the circulation path is appropriate or inappropriate by the insertion state of the inspection jig inserted between the balls.

The inspection jig includes, for example, a narrow portion and a wide portion provided on an insertion direction rear side of the narrow portion. A circumferential width of the narrow portion is larger than a total gap amount between the balls when the number of the balls disposed in the circulation path is excessively large, and is smaller than a total gap amount between the balls when the number of the balls disposed in the circulation path is appropriate. A circumferential width of the wide portion is larger than the total gap amount between the balls when the number of the balls disposed in the circulation path is appropriate, and is smaller than a total gap amount between the balls when the number of the balls disposed in the circulation path is excessively small. In a case where the inspection jig is used, when the narrow portion is not inserted between the balls in the circulation path, it can be determined that the number of balls is excessively large. When the narrow portion is inserted between the balls in the circulation path and the wide portion is not inserted, it can be determined that the number of balls is appropriate. When the wide portion is inserted between the balls in the circulation path, it can be determined that the number of balls is excessively small.

The inspection jig may include a stepped portion that connects the narrow portion and the wide portion. By providing the stepped portion in this manner, it becomes clear how far the inspection jig can be inserted, and the number of balls can be easily determined by the inspection jig.

The above inspection jig can be provided with a mark indicating an insertion depth for determining whether the number of balls is appropriate or inappropriate. In this case, whether the number of balls is appropriate or inappropriate can be determined by the position of the mark when the inspection jig is inserted.

The number of balls may be inspected by using a plurality of the inspection jigs having different circumferential widths. In this case, whether the number of balls in the circulation path is appropriate or inappropriate can be confirmed by whether each inspection jig can be inserted between the balls.

When three or more circulation paths are provided in different axial regions, the inspection jig can be directly inserted into the circulation path at an axial end, but the inspection jig cannot be directly inserted between the balls in an intermediate circulation path, and it is therefore difficult to inspect the number of balls. Therefore, it is preferable that the first inspection jig and the second inspection jig are used as the inspection jig, and the first inspection jig is inserted from one side in the axial direction and the second inspection jig is inserted from the other side in the axial direction between the balls in the intermediate circulation path. The number of balls disposed in the intermediate circulation path can be inspected by the insertion state of each inspection jig at this time.

When the inspection jig is inserted between the balls, it is necessary to move the balls in the circulation path. At this time, by inserting the inspection jig between the balls while relatively reciprocating the screw shaft and the nut in a rotation direction, the balls easily roll in the circulation path, and the inspection jig is easily inserted between the balls. The inspection jig may be inserted between the balls while the inspection jig is held in a relatively movable state in the rotation direction of the ball screw device with respect to the screw shaft and the nut of the ball screw device.

In the above inspection method, the inspection jig is inserted between the balls in the circulation path, and the inspection jig can be stopped when a predetermined load is applied to the inspection jig. Whether the number of balls in the circulation path is appropriate or inappropriate can be determined by a stop position of the inspection jig.

The above inspection method can be automatically performed by an inspection device for a ball screw device, the inspection device including an inspection jig, a drive unit that inserts the inspection jig between the balls disposed in the circulation path, and a determiner that determines whether the number of the balls in the circulation path is appropriate or inappropriate by an insertion state of the inspection jig.

### ADVANTAGEOUS EFFECTS OF INVENTION

As described above, the present invention makes it possible to easily confirm the number of balls in the circulation path after assembling the ball screw device.

### BRIEF DESCRIPTION OF DRAWINGS

FIG. 1 is a perspective view of a ball screw device and an inspection jig.
FIG. 2 is a sectional view of the ball screw device.
FIG. 3 is a schematic diagram illustrating an insertion state of the inspection jig in a case where the number of balls is excessively small.
FIG. 4 is a schematic diagram illustrating an insertion state of the inspection jig in a case where the number of balls is appropriate.
FIG. 5 is a schematic diagram illustrating an insertion state of the inspection jig in a case where the number of balls is excessively large.
FIG. 6 is a schematic diagram illustrating a state in which the number of balls in three rows of circulation paths is inspected.
FIG. 7 is a flowchart illustrating an inspection procedure of the number of balls in three rows of circulation paths.
FIG. 8 is a block diagram of an inspection device.
FIG. 9 is a schematic diagram illustrating a state in which the number of balls in four rows of circulation paths is inspected.

### DESCRIPTION OF EMBODIMENT

Hereinafter, an embodiment of the present invention will be described with reference to the drawings.

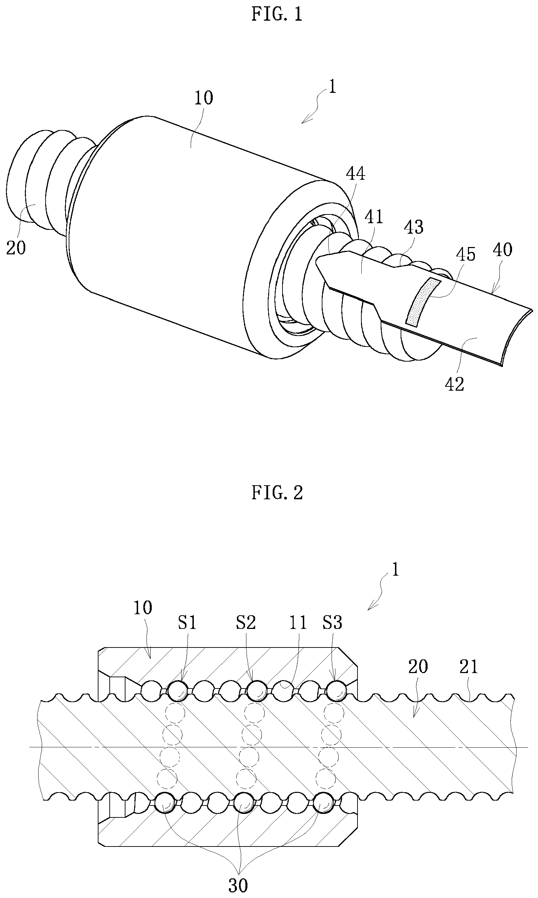

In an inspection method according to an embodiment of the present invention, as illustrated in FIG. 1, an inspection jig 40 is inserted between a nut 10 and a screw shaft 20 of a ball screw device 1. In the present specification, a circumferential direction around a rotation axis of the ball screw device 1 is referred to as a "circumferential direction", and a rotation axis direction of the ball screw device 1 is referred to as an "axial direction".

### [Configuration of ball screw device]

As illustrated in FIG. 2, the ball screw device 1 includes the nut 10, the screw shaft 20, and a plurality of balls 30. A spiral screw groove 11 is formed on an inner peripheral surface of the nut 10. A spiral screw groove 21 is formed on an outer peripheral surface of the screw shaft 20. A plurality of balls 30 is disposed on a rolling path formed by the screw groove 11 of the nut 10 and the screw groove 21 of the screw shaft 20. The end point and the start point of each rolling path communicate with each other through a return passage (not illustrated) to form a circulation path for circulating the balls 30. The return passage includes, for example, a known circulating member such as a U-shaped tube or a circulating piece embedded in the nut 10.

In the present embodiment, circulation paths (in the illustrated example, three rows of circulation paths S1, S2, and S3) are provided at a plurality of places separated in the axial direction. In the illustrated example, the circulation paths S1, S2, and S3 are formed by screw grooves 11 and 21 for one round (360°) and a return passage (not illustrated), and the same number of balls 30 are disposed in each of the circulation paths S1, S2, and S3. The screw grooves 11 and 21 in which no ball 30 is disposed are provided between the circulation paths S1, S2, and S3 in the axial direction.

### [Configuration of inspection jig]

The inspection jig 40 has a plate shape as illustrated in FIG. 1. The thickness of the inspection jig 40 is smaller than a radial gap between the inner peripheral surface of the nut 10 (minimum diameter portion of the screw groove 11) and the outer peripheral surface of the screw shaft 20 (maximum diameter portion of the screw groove 21). The inspection jig 40 has rigidity that does not deform when inserted between the balls 30 (described in detail later), and has a thickness of, for example, 1/2 or more of the radial gap between the inner peripheral surface of the nut 10 and the outer peripheral surface of the screw shaft 20. The inspection jig 40 includes a material softer than the nut 10, the screw shaft 20, and the ball 30, and includes, for example, resin.

The inspection jig 40 includes a narrow portion 41 provided on an insertion direction leading side (hereinafter, referred to as a "distal end side") and a wide portion 42 provided on an insertion direction rear side (hereinafter, referred to as a "proximal end side") of the narrow portion 41 and having a circumferential width wider than a circumferential width of the narrow portion. In the illustrated example, each of the narrow portion 41 and the wide portion 42 includes an axial region having a constant circumferential width. A stepped portion 43 connecting the narrow portion 41 and the wide portion 42 is provided between the narrow portion and the wide portion. The stepped portion 43 has a tapered shape whose circumferential width is widened toward a proximal end side (wide portion 42 side). A distal end 44 of the inspection jig 40 has a tapered shape in which the circumferential width decreases toward the distal end side.

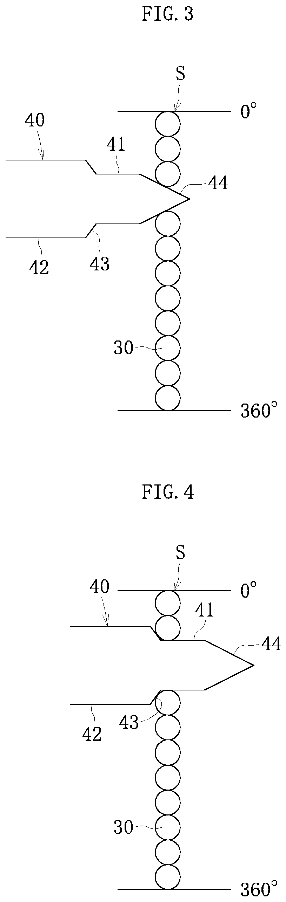

The circumferential width of the narrow portion 41 of the inspection jig 40 is larger than a total gap amount between the balls 30 when the number of balls 30 disposed in each of the circulation paths S1 to S3 is excessively large (for example, when the number is larger than an appropriate number by one). That is, when the number of balls 30 disposed in each of the circulation paths S1 to S3 is excessively large, the total gap amount between the balls 30 is smaller than the circumferential width of the narrow portion 41 of the inspection jig 40, and thus the narrow portion 41 of the inspection jig 40 cannot be inserted between the balls 30. In this case, as illustrated in FIG. 3, when the inspection jig 40 is inserted between the balls 30 in a circulation path S (circulation path having a similar configuration to the circulation paths S1 to S3) from one side in the axial direction (left side in the drawing), the inspection jig 40 is stopped in a state where the inspection jig is inserted between the balls 30 halfway through the distal end 44.

The circumferential width of the narrow portion 41 of the inspection jig 40 is smaller than a total gap amount between the balls 30 when the number of balls 30 disposed in each of the circulation paths S1 to S3 is appropriate. That is, when the number of balls 30 disposed in each of the circulation paths S1 to S3 is appropriate, the total gap amount between the balls 30 is larger than the circumferential width of the narrow portion 41 of the inspection jig 40, and thus the narrow portion 41 of the inspection jig 40 is inserted between the balls 30 of the circulation paths S as illustrated in FIG. 4.

The circumferential width of the wide portion 42 of the inspection jig 40 is larger than the total gap amount between the balls 30 when the number of balls 30 disposed in each of the circulation paths S1 to S3 is appropriate. That is, when the number of balls 30 disposed in each of the circulation paths S1 to S3 is appropriate, the total gap amount between the balls 30 is smaller than the circumferential width of the wide portion 42 of the inspection jig 40, and thus the wide portion 42 of the inspection jig 40 cannot be inserted between the balls 30. In this case, as illustrated in FIG. 4, when the inspection jig 40 is inserted between the balls 30 on the circulation path S from one side in the axial direction (left side in the drawing), the inspection jig 40 is stopped in a state where the stepped portion 43 between the narrow portion 41 and the wide portion 42 abuts on the ball 30.

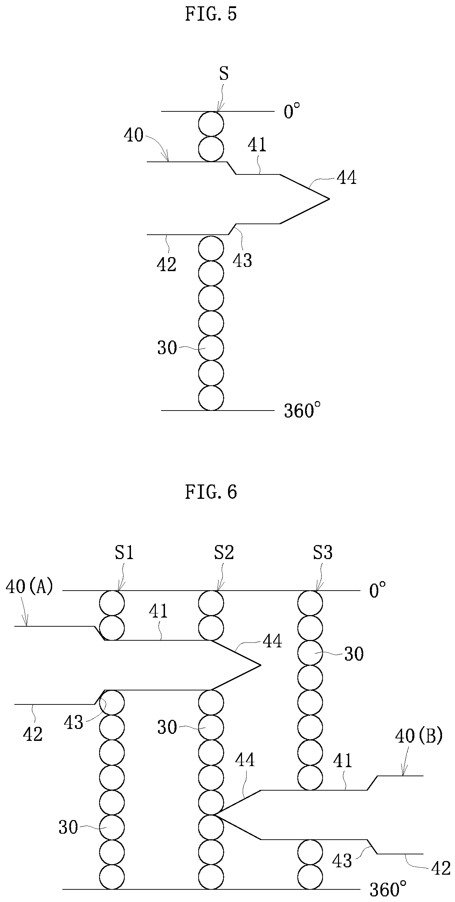

The circumferential width of the wide portion 42 of the inspection jig 40 is smaller than a total gap amount between the balls 30 when the number of balls 30 arranged in each of the circulation paths S1 to S3 is excessively small (for example, when the number is smaller than an appropriate number by one). That is, when the number of balls 30 disposed in each of the circulation paths S1 to S3 is excessively small, the total gap amount between the balls 30 is larger than the circumferential width of the wide portion 42 of the inspection jig 40, and thus the wide portion 42 of the inspection jig 40 is inserted between the balls 30 in the circulation path S as illustrated in FIG. 5.

As described above, by inserting the inspection jig 40 between the balls 30 in the circulation path S and confirming a stop position of the inspection jig, it is possible to determine whether the number of balls 30 in the circulation path S is appropriate. Specifically, when the inspection jig 40 is stopped before the narrow portion 41 is inserted between the balls 30, that is, in a state where the distal end 44 is inserted between the balls 30 (see FIG. 3), it can be determined that the number of balls 30 in the circulation path S is excessively large. When the inspection jig 40 is stopped in a state where the narrow portion 41 is inserted between the balls 30 (see FIG. 4), it can be determined that the balls 30 in the circulation path S are appropriate. When the inspection jig 40 is stopped in a state where the wide portion 42 is inserted between the balls 30 (see FIG. 5), it can be determined that the balls 30 in the circulation path S are excessively small.

### [Procedure of inspection method]

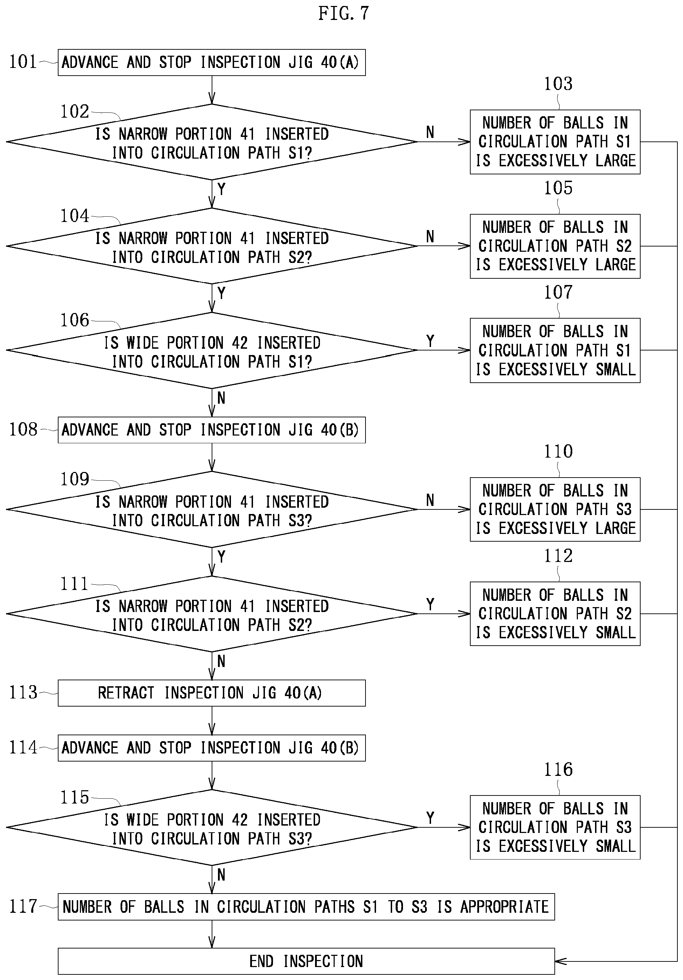

In the present embodiment, the number of balls 30 in the three rows of circulation paths S 1 to S3 is inspected by using the two inspection jigs 40. This inspection method will be described with reference to FIGS. 6 and 7. Note that the two inspection jigs 40 have a similar configuration, but here, reference signs "40(A)" and "40(B)" are given to distinguish the two inspection jigs 40 from each other. The movement of each of the inspection jigs 40(A) and 40(B) toward a side to be inserted into the gap between the nut 10 and the screw shaft 20 is referred to as "advancing", and the movement in the opposite direction is referred to as "retracting".

First, one inspection jig 40(A) is advanced and inserted into the gap between the nut 10 and the screw shaft 20 from one side in the axial direction. When a predetermined load or more is applied to the inspection jig 40(A), the inspection jig 40(A) is stopped (step 101). Thereafter, it is confirmed whether the narrow portion 41 of the inspection jig 40(A) is inserted between the balls 30 in the circulation path S1 (step 102). When the narrow portion is not inserted, it is determined that the number of balls 30 in the circulation path S1 is excessively large (step 103, see FIG. 3), and the inspection ends. Next, it is confirmed whether the narrow portion 41 of the inspection jig 40(A) is inserted between the balls 30 in the circulation path S2 (step 104). When the narrow portion is not inserted, it is determined that the number of balls 30 in the circulation path S2 is excessively large (step 105, see FIG. 3), and the inspection ends. Subsequently, it is confirmed whether the wide portion 42 of the inspection jig 40 is inserted between the balls 30 in the circulation path S1 (step 106). When the narrow portion is not inserted, it is determined that the number of balls 30 in the circulation path S1 is excessively small (step 107, see FIG. 5), and the inspection ends.

On the other hand, as illustrated in FIG. 6, when the narrow portion 41 is inserted between the balls 30 in the circulation paths S1 and S2 and the wide portion 42 is not inserted between the balls 30 in the circulation path S1, the processing proceeds to the next step.

In the next step 108, the inspection jig 40(B) is advanced while the narrow portion 41 of the inspection jig 40(A) is inserted between the balls 30 in the circulation paths S1 and S2, and is inserted into the gap between the nut 10 and the screw shaft 20 from the other side in the axial direction. Then, when a predetermined load or more is applied to the inspection jig 40(B), the inspection jig 40(B) is stopped. Thereafter, it is confirmed whether the narrow portion 41 of the inspection jig 40(B) is inserted between the balls 30 in the circulation path S3 (step 109). When the narrow portion is not inserted, it is determined that the number of balls 30 in the circulation path S3 is excessively large (step 110, see FIG. 3), and the inspection ends.

At this time, since the narrow portion 41 of the inspection jig 40(A) is already inserted between the balls 30 in the circulation path S2 (see FIG. 6), when the number of balls 30 in the circulation path S2 is appropriate, the narrow portion 41 of the inspection jig 40(B) cannot be further inserted. Therefore, it is confirmed whether the narrow portion 41 of the inspection jig 40(B) is inserted between the balls 30 in the circulation path S2 (step 111). When the narrow portion is not inserted, it is determined that the number of balls 30 in the circulation path S2 is excessively small (step 112), and the inspection ends.

On the other hand, as illustrated in FIG. 6, when the narrow portion 41 of the inspection jig 40(B) is inserted between the balls 30 in the circulation path S3 and is not inserted between the balls 30 in the circulation path S2, the processing proceeds to the next step.

Next, one of the inspection jigs 40(A) is retracted and pulled out from between the balls 30 in the circulation path S2 (step 113). Thereafter, the other inspection jig 40(B) is further advanced, and the inspection jig 40(B) is stopped when a predetermined load or more is applied (step 114). Then, it is confirmed whether the wide portion 42 of the inspection jig 40(B) is inserted between the balls 30 in the circulation path S3 (step 115). When the narrow portion is not inserted, it is determined that the number of balls 30 in the circulation path S3 is excessively small (step 116), and the inspection ends.

On the other hand, when the wide portion 42 of the inspection jig 40(B) is not inserted between the balls 30 in the circulation path S3, it is determined from the current and previous results that the number of balls 30 in all the circulation paths S1 to S3 is not excessively large or excessively small but appropriate (step 117), and the inspection ends.

### [Configuration of inspection device]

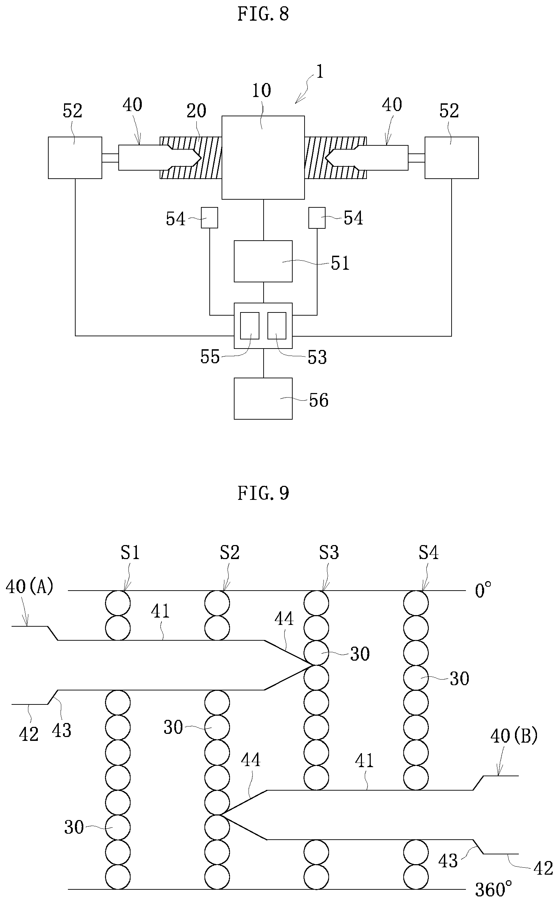

The above inspection is automatically performed by using, for example, an inspection device illustrated in FIG. 8. The inspection device includes a nut rotation unit 51 that rotates the nut 10 of the ball screw device 1, a screw shaft fixing portion (not illustrated) that fixes a screw shaft 20, an inspection jig holder (not illustrated) that holds the inspection jig 40 in a state of being movable in the axial direction and the circumferential direction, an inspection jig drive unit 52 that moves the inspection jig 40 in the axial direction, a controller 53 that controls the nut rotation unit 51 and the inspection jig drive unit 52, a sensor 54 that confirms a position of the inspection jig 40, a determiner 55 that determines whether the number of balls 30 is appropriate or inappropriate, and a display unit 56 such as a monitor that displays an inspection result. Note that a screw shaft rotation unit that rotates the screw shaft 20 may be provided instead of the nut rotation unit 51, and a nut fixing portion may be provided instead of the screw shaft fixing portion.

The inspection jig drive unit 52 biases the inspection jig 40 by a biasing means using elastic force such as a spring, air pressure, or hydraulic pressure. As a result, a load equal to or larger than the biasing force of the biasing means is not applied to the inspection jig 40. That is, when the inspection jig 40 is inserted between the balls in the circulation path, the inspection jig 40 is stopped when a load equal to or larger than the biasing force of the biasing means is applied. In addition, a load meter or a torque meter may be provided in the inspection jig drive unit 52, or a servomotor capable of detecting torque may be used as the inspection jig drive unit 52. In this case, the inspection jig drive unit 52 is only required to be controlled to stop the inspection jig 40 when it is detected that a load of a predetermined value or more is applied to the inspection jig 40.

The ball screw device 1 and the inspection jig 40 are set in the inspection device, and the inspection jig 40 is disposed in an extension of the axial direction of the gap between the nut 10 of the ball screw device 1 and the screw shaft 20 in the radial direction (see FIG. 1). From this state, the inspection jig 40 is moved in the axial direction by the inspection jig drive unit 52, inserted into the gap between the nut 10 and the screw shaft 20, and inserted between the balls 30 disposed in the circulation paths S1 to S3. At this time, since the inspection jig 40 is held in a state of being movable in the circumferential direction, the circumferential position of the inspection jig 40 is automatically adjusted by the distal end 44 of the inspection jig 40 coming into contact with the ball 30, and the distal end 44 of the inspection jig 40 is easily inserted between the balls 30. When the inspection jig 40 is inserted between the balls 30, the balls 30 easily move in the circulation path S1 by reciprocating the nut 10 in the rotation direction by the nut rotation unit 51. As a result, the inspection jig 40 is easily inserted between the balls 30 while moving the balls 30. At this time, the inspection jig 40 may be inserted between the balls 30 while being held relatively movable with respect to the screw shaft 20 and the nut 10 in the rotation direction of the ball screw device 1 (the circumferential direction about the axial centers of the screw shaft 20 and the nut 10).

Then, when the inspection jig 40 stops, the sensor 54 detects the stop position of the inspection jig 40 at this time. The determiner 55 determines whether the number of balls 30 in the circulation paths S1 to S3 is appropriate on the basis of the stop position (that is, an insertion state) of the inspection jig 40 detected by the sensor 54, and the determination result is displayed on the display unit 56.

The present invention is not limited to the above embodiment. Hereinafter, other embodiments of the present invention will be described, but points similar to those of the above embodiment will not be repeated.

For example, FIG. 9 illustrates a case where the number of balls 30 in four rows of circulation paths S1 to S4 is inspected. In this case, by confirming that the narrow portion 41 of one inspection jig 40(A) is inserted between the balls 30 in the intermediate circulation path S2 and the narrow portion 41 of the other inspection jig 40(B) is not inserted between the balls, it is possible to confirm that the number of balls 30 in the circulation path S2 is appropriate. Similarly for the other intermediate circulation path S3, by confirming that the narrow portion 41 of the other inspection jig 40(B) is inserted between the balls 30 and the narrow portion 41 of the one inspection jig 40(A) is not inserted between the balls, it is possible to confirm that the number of balls 30 is appropriate.

Therefore, even when the ball screw device 1 has four or more rows of circulation paths, it is possible to determine whether the number of balls in the intermediate circulation path is appropriate or inappropriate by inserting the inspection jigs 40 from one side in the axial direction and the other side in the axial direction between the balls 30 in the intermediate circulation path and confirming the insertion state of each inspection jig 40 at this time.

In the above embodiment, a case where the number of balls in the circulation path is automatically inspected by the inspection device has been described, but the present invention is not limited to this case. An operator may manually insert the inspection jig 40 between the nut 10 and the screw shaft 20 and determine the whether the number of balls is appropriate or inappropriate by the insertion state (for example, an insertion depth of the inspection jig 40).

By providing a mark for confirming the insertion depth on the inspection jig 40, the stop position of the inspection jig 40 can be easily confirmed. For example, when the inspection is automatically performed, the stop position of the inspection jig 40 can be confirmed by detecting the position of the mark provided on the inspection jig 40 with the sensor 54. When the inspection is manually performed, the stop position of the inspection jig 40 can be confirmed by the operator visually confirming the position of the mark provided on the inspection jig 40.

For example, a mark 45 as illustrated in FIG. 1 can be provided on the inspection jig 40. The mark 45 is provided at a position overlapping with the axial end of the nut 10 in the radial direction in a state where the inspection jig 40 is appropriately inserted (for example, the state illustrated in FIG. 4). That is, when the axial end of the nut 10 and the mark 45 overlap when the inspection jig 40 is viewed from an outer peripheral side, it can be determined that the inspection jig 40 is appropriately inserted and the number of balls 30 in the circulation path S is appropriate. On the other hand, when the mark 45 is separated from the nut 10 in the axial direction or the mark 45 is hidden behind an inner periphery of the nut 10 and cannot be seen when the inspection jig 40 is viewed from the outer peripheral side, it can be determined that the inspection jig 40 is not appropriately inserted and the number of balls in the circulation path S is not appropriate.

In the above embodiment, a case where the inspection jig 40 having the narrow portion 41 and the wide portion 42 is used has been described, but the present invention is not limited to this case. The number of balls may be inspected by using a plurality of inspection jigs having different circumferential widths. For example, an inspection jig having the same width as the narrow portion 41 and an inspection jig having the same width as the wide portion 42 are prepared, and the number of balls can be inspected by sequentially inserting these inspection jigs between the balls in the circulation path.

### REFERENCE SIGNS LIST

- 1: Ball screw device
- 10: Nut
- 11: Screw groove
- 20: Screw shaft
- 21: Screw groove
- 30: Ball
- 40: Inspection jig
- 41: Narrow portion
- 42: Wide portion
- 43: Stepped portion
- 44: Distal end
- 51: Nut rotation unit
- 52: Inspection jig drive unit
- 53: Controller
- 54: Sensor

- 55: Determiner
- 56: Display unit
- S, S1 to S4: Circulation path

## Claims

1. A method for inspecting a number of balls disposed in a circulation path of a ball screw device, the method comprising inserting an inspection jig (40) between the balls (30) disposed in the circulation path through a gap between a nut (10) and a screw shaft (20) of the ball screw device (1), and inspecting the number of the balls by an insertion state of the inspection jig (40) at a time of insertion.

2. The method for inspecting a ball screw device according to claim 1, wherein
the inspection jig includes a narrow portion and a wide portion provided on an insertion direction rear side of the narrow portion,
a circumferential width of the narrow portion is larger than a total gap amount between the balls when the number of the balls disposed in the circulation path is excessively large, and is smaller than a total gap amount between the balls when the number of the balls disposed in the circulation path is appropriate, and
a circumferential width of the wide portion is larger than a total gap amount between the balls when the number of the balls disposed in the circulation path is appropriate, and is smaller than a total gap amount between the balls when the number of the balls disposed in the circulation path is excessively small.

3. The method for inspecting a ball screw device according to claim 2, wherein the inspection jig includes a stepped portion that connects the narrow portion and the wide portion.

4. The method for inspecting a ball screw device according to any one of claims 1 to 3, wherein the inspection jig is provided with a mark for confirming an insertion depth.

5. The method for inspecting a ball screw device according to claim 1, wherein the number of the balls is inspected by using a plurality of the inspection jigs having different circumferential widths.

6. The method for inspecting a ball screw device according to any one of claims 1 to 5, wherein
the ball screw device has three or more of the circulation paths provided in different axial regions,
a first inspection jig and a second inspection jig are used as the inspection jig, and
the first inspection jig is inserted between the balls in an intermediate circulation path from one side in an axial direction and the second inspection jig is inserted between the balls in the intermediate circulation path from another side in the axial direction, and the number of the balls disposed in the intermediate circulation path is inspected by an insertion state of each of the first inspection jig and the second inspection jig at a time of insertion.

7. The method for inspecting a ball screw device according to any one of claims 1 to 6, wherein the inspection jig is inserted between the balls while the screw shaft and the nut of the ball screw device are relatively reciprocated in a rotation direction.

8. The method for inspecting a ball screw device according to any one of claims 1 to 7, wherein the inspection jig is inserted between the balls while the inspection jig is held in a relatively movable state in the rotation direction of the ball screw device with respect to the screw shaft and the nut of the ball screw device.

9. The method for inspecting a ball screw device according to any one of claims 1 to 8, wherein the inspection jig is inserted between the balls in the circulation path, and the inspection jig is stopped when a predetermined load is applied to the inspection jig.

10. An inspection jig (40) that is inserted between balls (30) disposed in a circulation path of a ball screw device (1) and inspects a number of the balls, wherein
the inspection jig (40) includes a narrow portion (41) and a wide portion (42) provided on an insertion direction rear side of the narrow portion,
a circumferential width of the narrow portion (41) is larger than a total gap amount between the balls when the number of the balls disposed in the circulation path is excessively large, and is smaller than a total gap amount between the balls when the number of the balls disposed in the circulation path is appropriate, and
a circumferential width of the wide portion (42) is larger than a total gap amount between the balls when the number of the balls disposed in the circulation path is appropriate, and is smaller than a total gap amount between the balls when the number of the balls disposed in the circulation path is excessively small.

11. An inspection device for a ball screw device, the inspection device inspecting a number of balls (30) disposed in a circulation path of the ball screw device (1), the inspection device comprising: an inspection jig (40); an inspection jig drive unit (52) that inserts the inspection jig (40) between the balls (30) disposed in the circulation path; and a determiner (55) that determines whether the number of the balls in the circulation path is appropriate or inappropriate by an insertion state of the inspection jig.

## Patentansprüche

1. Verfahren zur Prüfung einer Anzahl von Kugeln, die in einem Umlaufweg einer Kugelumlaufspindel angeordnet sind, wobei das Verfahren das Einführen einer Prüfvorrichtung (40) zwischen die im Umlaufweg angeordneten Kugeln (30) durch einen Spalt zwischen einer Mutter (10) und einer Spindelwelle (20) der Kugelumlaufspindel (1) sowie und das Prüfen der Anzahl der Kugeln anhand des Einführzustands der Prüfvorrichtung (40) zum Zeitpunkt des Einführens umfasst.

2. Verfahren zur Prüfung einer Kugelumlaufspindel gemäß Anspruch 1, wobei
die Prüfvorrichtung einen schmalen Abschnitt und einen breiten Abschnitt umfasst, der auf der in Einführrichtung hinter dem schmalen Abschnitt liegenden Seite vorgesehen ist,
die Umfangsbreite des schmalen Abschnitts größer ist als die Gesamtspaltbreite zwischen den Kugeln, wenn die Anzahl der im Umlaufweg angeordneten Kugeln übermäßig groß ist, und kleiner ist als der Gesamtabstand zwischen den Kugeln, wenn die Anzahl der im Umlaufweg angeordneten Kugeln angemessen ist, und
die Umfangsbreite des breiten Abschnitts größer ist als der Gesamtabstand zwischen den Kugeln, wenn die Anzahl der im Umlaufweg angeordneten Kugeln angemessen ist, und kleiner ist als der Gesamtabstand zwischen den Kugeln, wenn die Anzahl der im Umlaufweg angeordneten Kugeln zu gering ist.

3. Verfahren zur Prüfung einer Kugelumlaufspindelvorrichtung nach Anspruch 2, wobei die Prüfvorrichtung einen abgestuften Abschnitt aufweist, der den schmalen Abschnitt und den breiten Abschnitt verbindet.

4. Verfahren zur Prüfung einer Kugelumlaufspindelvorrichtung nach einem der Ansprüche 1 bis 3, wobei die Prüfvorrichtung mit einer Markierung zur Überprüfung der Einstecktiefe versehen ist.

5. Verfahren zur Prüfung einer Kugelumlaufspindelvorrichtung nach Anspruch 1, wobei die Anzahl der Kugeln unter Verwendung mehrerer Prüfvorrichtungen mit unterschiedlichen Umfangsbreiten geprüft wird.

6. Verfahren zur Prüfung einer Kugelumlaufspindelvorrichtung gemäß einem der Ansprüche 1 bis 5, wobei
die Kugelumlaufspindelvorrichtung drei oder mehr Umlaufwege aufweist, die in unterschiedlichen axialen Bereichen vorgesehen sind,
eine erste Prüfvorrichtung und eine zweite Prüfvorrichtung als Prüfvorrichtungen verwendet werden, und
die erste Prüfvorrichtung von einer Seite in axialer Richtung zwischen die Kugeln in einem mittleren Umlaufweg eingeführt wird und die zweite Prüfvorrichtung von einer anderen Seite in axialer Richtung zwischen die Kugeln in dem mittleren Umlaufweg eingeführt wird, und die Anzahl der in dem mittleren Umlaufweg angeordneten Kugeln anhand des Einführzustands jeweils der ersten Prüfvorrichtung und der zweiten Prüfvorrichtung zum Zeitpunkt des Einführens geprüft wird.

7. Verfahren zur Prüfung einer Kugelumlaufspindelvorrichtung gemäß einem der Ansprüche 1 bis 6, wobei die Prüfvorrichtung zwischen die Kugeln eingeführt wird, während die Spindelwelle und die Mutter der Kugelumlaufspindelvorrichtung relativ zueinander in einer Drehrichtung hin- und herbewegt werden.

8. Verfahren zur Prüfung einer Kugelumlaufspindelvorrichtung gemäß einem der Ansprüche 1 bis 7, wobei die Prüfvorrichtung zwischen die Kugeln eingeführt wird, während die Prüfvorrichtung in Bezug auf die Spindelwelle und die Mutter der Kugelumlaufspindelvorrichtung in der Drehrichtung der Kugelumlaufspindelvorrichtung in einem relativ beweglichen Zustand gehalten wird.

9. Verfahren zur Prüfung einer Kugelumlaufspindel gemäß einem der Ansprüche 1 bis 8, wobei die Prüfvorrichtung zwischen die Kugeln im Umlaufweg eingeführt wird und die Prüfvorrichtung angehalten wird, wenn eine vorbestimmte Last auf die Prüfvorrichtung ausgeübt wird.

10. Eine Prüfvorrichtung (40), die zwischen Kugeln (30) eingeführt wird, die in einem Umlaufweg einer Kugelumlaufspindel (1) angeordnet sind, und eine Anzahl der Kugeln prüft, wobei
die Prüfvorrichtung (40) einen schmalen Abschnitt (41) und einen breiten Abschnitt (42) umfasst, der auf der in Einführrichtung hinter dem schmalen Abschnitt liegenden Seite vorgesehen ist,
die Umfangsbreite des schmalen Abschnitts (41) größer ist als der Gesamtabstand zwischen den Kugeln, wenn die Anzahl der im Umlaufweg angeordneten Kugeln übermäßig groß ist, und kleiner ist als der Gesamtabstand zwischen den Kugeln, wenn die Anzahl der im Umlaufweg angeordneten Kugeln angemessen ist, und
die Umfangsbreite des breiten Abschnitts (42) größer ist als der Gesamtabstand zwischen den Kugeln, wenn die Anzahl der im Umlaufweg angeordneten Kugeln angemessen ist, und kleiner ist als der Gesamtabstand zwischen den Kugeln, wenn die Anzahl der im Umlaufweg angeordneten Kugeln zu gering ist.

11. Prüfvorrichtung für eine Kugelumlaufspindel, wobei die Prüfvorrichtung die Anzahl der in einem Umlaufweg der Kugelumlaufspindel (1) angeordneten Kugeln (30) prüft, wobei die Prüfvorrichtung umfasst: eine Prüfvorrichtung (40); eine Prüfvorrichtungs-Antriebseinheit (52), die die Prüfvorrichtung (40) zwischen die im Umlaufweg angeordneten Kugeln (30) einführt; und eine Bestimmungseinheit (55), die anhand eines Einführzustands der Prüfvorrichtung bestimmt, ob die Anzahl der Kugeln im Umlaufweg angemessen oder unangemessen ist.

## Revendications

1. Procédé d'inspection d'un certain nombre de billes disposées dans un trajet de circulation d'un dispositif à vis à billes, le procédé comprenant l'insertion d'un gabarit d'inspection (40) entre les billes (30) disposées dans le trajet de circulation à travers un espace entre un écrou (10) et une tige de vis (20) du dispositif à vis à billes (1), et l'inspection du nombre de billes par un état d'insertion du gabarit d'inspection (40) à un moment de l'insertion.

2. Procédé d'inspection d'un dispositif à vis à billes selon la revendication 1, dans lequel
le gabarit d'inspection comporte une partie étroite et une partie large prévue sur un côté arrière de direction d'insertion de la partie étroite,
une largeur circonférentielle de la partie étroite est supérieure à une quantité totale d'espace entre les billes lorsque le nombre de billes disposées dans le trajet de circulation est excessivement grand, et est inférieure à une quantité totale d'espace entre les billes lorsque le nombre de billes disposées dans le trajet de circulation est approprié, et
une largeur circonférentielle de la partie large est supérieure à une quantité totale d'espace entre les billes lorsque le nombre de billes disposées dans le trajet de circulation est approprié, et est inférieure à une quantité d'espace totale entre les billes lorsque le nombre de billes disposées dans le trajet de circulation est excessivement faible.

3. Procédé d'inspection d'un dispositif à vis à billes selon la revendication 2, dans lequel le gabarit d'inspection comporte une partie étagée qui relie la partie étroite et la partie large.

4. Procédé d'inspection d'un dispositif à vis à billes selon l'une quelconque des revendications 1 à 3, dans lequel le gabarit d'inspection est pourvu d'une marque pour confirmer une profondeur d'insertion.

5. Procédé d'inspection d'un dispositif à vis à billes selon la revendication 1, dans lequel le nombre de billes est inspecté à l'aide d'une pluralité de gabarits d'inspection ayant des largeurs circonférentielles différentes.

6. Procédé d'inspection d'un dispositif à vis à billes selon l'une quelconque des revendications 1 à 5, dans lequel
le dispositif à vis à billes a au moins trois des trajets de circulation prévus dans des régions axiales différentes,
un premier gabarit d'inspection et un second gabarit d'inspection sont utilisés en guise de gabarit d'inspection, et
le premier gabarit d'inspection est inséré entre les billes dans un trajet de circulation intermédiaire depuis un côté dans une direction axiale et le second gabarit d'inspection est inséré entre les billes dans le trajet de circulation intermédiaire depuis un autre côté dans la direction axiale, et le nombre de billes disposées dans le trajet de circulation intermédiaire est inspecté par un état d'insertion de chacun du premier gabarit d'inspection et du second gabarit d'inspection au moment de l'insertion.

7. Procédé d'inspection d'un dispositif à vis à billes selon l'une quelconque des revendications 1 à 6, dans lequel le gabarit d'inspection est inséré entre les billes tandis que la tige de vis et l'écrou du dispositif à vis à billes sont relativement alternatifs dans un sens de rotation.

8. Procédé d'inspection d'un dispositif à vis à billes selon l'une quelconque des revendications 1 à 7, dans lequel le gabarit d'inspection est inséré entre les billes tandis que le gabarit d'inspection est maintenu dans un état relativement mobile dans la direction de rotation du dispositif à vis à billes par rapport à l'arbre à vis et à l'écrou du dispositif à vis à billes.

9. Procédé d'inspection d'un dispositif à vis à billes selon l'une quelconque des revendications 1 à 8, dans lequel le gabarit d'inspection est inséré entre les billes dans le trajet de circulation, et le gabarit d'inspection est arrêté lorsqu'une charge prédéterminée est appliquée au gabarit d'inspection.

10. Gabarit d'inspection (40) qui est inséré entre des billes (30) disposées dans un trajet de circulation d'un dispositif à vis à billes (1) et qui inspecte un certain nombre de billes, dans lequel le gabarit d'inspection (40) comporte une partie étroite (41) et une partie large (42) prévues sur un côté arrière de direction d'insertion de la partie étroite,
une largeur circonférentielle de la partie étroite (41) est supérieure à une quantité totale d'espace entre les billes lorsque le nombre de billes disposées dans le trajet de circulation est excessivement grand, et est inférieure à une quantité totale d'espace entre les billes lorsque le nombre de billes disposées dans le trajet de circulation est approprié, et
une largeur circonférentielle de la partie large (42) est supérieure à une quantité totale d'espace entre les billes lorsque le nombre de billes disposées dans le trajet de circulation est approprié, et est inférieure à une quantité d'espace totale entre les billes lorsque le nombre de billes disposées dans le trajet de circulation est excessivement faible.

11. Dispositif d'inspection pour un dispositif à vis à billes, le dispositif d'inspection inspectant un nombre de billes (30) disposées dans un trajet de circulation du dispositif à vis à billes (1), le dispositif d'inspection comprenant : un gabarit d'inspection (40) ; une unité d'entraînement de gabarit d'inspection (52) qui insère le gabarit d'inspection (40) entre les billes (30) disposées dans le trajet de circulation ; et un dispositif de détermination (55) qui détermine si le nombre de billes dans le trajet de circulation est approprié ou inapproprié par un état d'insertion du gabarit d'inspection.
